Europäisches Patentamt

European Patent Office

Office européen des brevets

(11) Veröffentlichungsnummer: **0 050 322**
A1

## (12) EUROPÄISCHE PATENTANMELDUNG

(21) Anmeldenummer: 81108381.5

(22) Anmeldetag: **15.10.81**

(51) Int. Cl.³: **E 06 B 3/54**, C 03 B 23/24, C 03 C 27/12, E 04 B 5/46, E 04 C 2/54, E 04 D 3/06, F 24 J 3/02

(30) Priorität: **16.10.80 DE 3039031**

(43) Veröffentlichungstag der Anmeldung: **28.04.82** **Patentblatt 82/17**

(84) Benannte Vertragsstaaten: **AT BE CH DE FR GB LI NL SE**

(71) Anmelder: **Dala Invest AB, Rödavägen 48C, S-78 151 Borlänge (SE)**

(72) Erfinder: **Peterson, Folke Kungl. Tekniska Högskolan, Institut för Uppvämnings- och Ventiletionsteknika, S-10 044 Stockholm (SE)**
Erfinder: **Skoog, Kurt Kungl. Tekniska Högskolan, Institut för Uppvämnings- och Ventiletionsteknika, S-10 044 Stockholm (SE)**
Erfinder: **Göransson, Per Kungl. Tekniska Högskolan, Institut för Uppvämnings- och Ventiletionsteknika, S-10 044 Stockholm (SE)**

(74) Vertreter: **Popp, Eugen, c/o Popp, Sajda und v. Bülow Patentanwälte Postfach 860624, D-8000 München 86 (DE)**

(54) Verglasung einer Raumöffnung oder dgl.

㉑ Die Verglasung besteht aus einer Vielzahl von aneinandergefügten Voll- oder Hohlkörpern (10) aus Glas oder transparentem Kunststoff, wobei die Voll- oder Hohlkörper (10) vorzugsweise Kugelform haben oder durch zylindrische Stäbe bzw. Röhren gebildet sind. Auf diese Weise ist die Verglasung jeder räumlichen Ausdehnung anpaßbar und am Einbauort herstellbar. Ferner ist die Verglasung bei Beschädigung eines Teils partiell bzw. lokal reparierbar.

ACTORUM AG

Die Erfindung betrifft eine Verglasung einer Raumöffnung oder dgl.

Normalerweise erfolgt die Verglasung einer Raumöffnung bzw. einer Fläche mittels einer Scheibe aus Glas oder durchscheinendem, (nicht unbedingt zugleich durchsichtigen) Kunststoff, wobei bei Verwendung ebener Scheiben keine Herstellungs- und Montageprobleme auftreten. Anders verhält es sich jedoch, wenn die Glasscheibe einer bestimmten Oberflächenformation folgen soll. Dann ist es erforderlich, die Scheibe entsprechend zu formen, wozu besondere Vorrichtungen erforderlich sind. Die Formung erfolgt in der Regel beim Herstellungsbetrieb, kann also nicht am Einbauort vorgenommen werden.

Ferner besteht bei der bekannten Verglasung der Nachteil, dass bei einerBeschädigung eines Teils der Scheibe die gesamte Scheibe ausgewechselt werden muss. Die Material- und Montagekosten sind dementsprechend gross.

Der vorliegenden Erfindung liegt daher die Aufgabe zugrunde, eine Verglasung für Raumöffnungen oder dgl. zu schaffen, die in einfacher Weise jeder räumlichen Ausdehnung anpassbar und am Einbauort herstellbar ist und die bei Beschädigung eines Teils partiell bzw. lokal reparierbar ist.

Diese Aufgabe wird erfindungsgemäss in denkbar einfacher Weise dadurch gelöst, dass die Verglasung aus einer Vielzahl von aneinander gefügten Voll- oder Hohlkörpern aus Glas oder transparentem Kunststoff besteht.

Insbesondere wenn die Voll- oder Hohlkörper Kugelform haben, ist eine in jeder Richtung gewölbte Glasfront herstellbar.

Die erfindungsgemäss Verglasung verhindert einen konvektiven Wärmeaustausch oder Massentransport zwischen den bei-

den durch die Verglasung voneinander getrennten Räumen, erlaubt jedoch den Durchgang einer Strahlung innerhalb eines vom gewählten Material für die "Verglasung" abhängigen bestimmten Wellenlängenbereiches (bei Glas z. B. ca. 95 % des normalen Sonnenlichts). Es ist augenscheinlich, dass die erfindungsgemässe Verglasung am Einbauort herstellbar ist. Bei Beschädigung eines Teils der Verglasung brauchen ferner nur die beschädigten Voll- oder Hohlkörper ausgewechselt zu werden. Diese partielle Reparatur ist auch bei einer komplizierten Wölbung der Verglasung möglich. Bei Verwendung einer durchgehenden Glasscheibe wäre eine derartige partielle Reparatur nicht denkbar, da bei einer Beschädigung einer gewölbten Glasscheibe auf Grund der inneren Spannungen gewöhnlich die gesamte Glasscheibe bricht.

Natürlich ist die erfindungsgemässe Verglasung nur dann sinnvoll, wenn es nicht auf die optische Wahrnehmung von hinter der Glasseibe angeordneten Gegenständen ankommt. Die erfindungsgemässe Glasscheibe eignet sich also vorwiegend dort, wo es nur darauf ankommt, dass die Verglasung lichtdurchlässig ist.

Bei Verwendung dünnwandiger Hohlkörper aus Glas (mit einer Wandstärke von kleiner als 0,5 mm) sind die Strahlungsverluste relativ gering, auf jeden Fall vielmals geringer als die Strahlungsverluste, die bei einer etwa 3 mm starken Glasplatte auftreten. Die Bruchfestigkeit der erfindungsgemässen Verglasung aus Hohlkörpern mit einer Wandstärke von etwa 0,5 mm ist zudem grösser als die einer 3 mm starken Glasplatte. Das heisst, dass auch der Materialeinsatz bei der erfindungsgemässen Verglasung aus Hohlkörpern wesentlich geringer ist als der bei Verwendung herkömmlicher Glasscheiben.

Die erfindungsgemässe Lösung mit Hohlkörpern aus Glas oder transparentem Kunststoff eignet sich insbesondere als Ersatz für eine Doppelscheibenanordnung. Dabei beträgt der Materialeinsatz bei der erfindungsgemässen Lösung unter Verwendung

0050322

von Hohlkörpern bei gleicher Bruchfestigkeit etwa 1/4 des Materialeinsatzes bei Verwendung herkömmlicher Doppelscheibenanordnungen.

Die Voll- oder Hohlkörper lassen sich in einfacher Weise durch Verschweissen oder Verleimen miteinander verbinden.

Bei Verwendung von langgestreckten Hohlkörpern zur Herstellung der erfindungsgemässen Verglasung können solche mit kreiszylinderischem, ovalem , polygonalem, insbesondere dreieckförmigem, sechseckigem oder quadratischem Querschnitt verwendet werden.

Nachstehend werden bevorzugte Ausführungsformen der erfindungsgemässen Verglasung anhand der beigefügten Zeichnung näher erläutert.

Es zeigen:

Fig. 1 die Verglasung einer Raumöffnung mittels röhrenförmiger Hohlkörper,

Fig. 2 eine erste Möglichkeit für die Verbindung röhrenförmiger Hohlkörper,

Fig. 3 eine zweite Möglichkeit für eine Verbindung der röhrenförmigen Hohlkörper, und

Fig. 4 eine abgewandelte Ausführungsform einer Verglasung einer Raumöffnung.

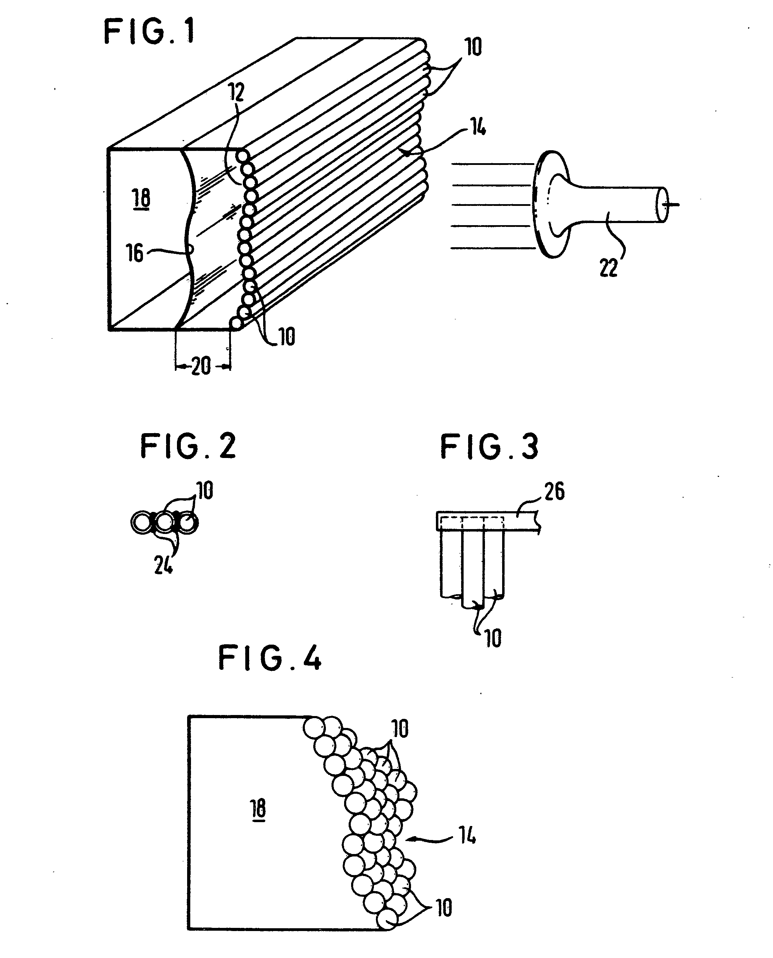

In Fig. 1 ist eine Verglasung einer Raumöffnung 12 bestehend aus aneinander gefügten röhrenförmigen Hohlkörpern 10 aus Glas oder transparentem Kunststoff dargestellt. Die Oberfläche der Verglasung, die in Fig. 1 generell mit der Bezugsziffer 14 gekennzeichnet ist, ist der Wölbung einer Fläche 16 innerhalb des Raumes 18 angepasst. Der Abstand zwischen der wellenförmigen Fläche 16 und der Verglasung 14 ist an jeder Stelle gleich.

0050322

Mit der Bezugsziffer 22 ist ein Strahlkörper gekennzeichnet, der vor der Verglasung 14 angeordnet ist und dessen Strahlen die Verglasung 14 auf Grund der dünnen Wandstärke der röhrenförmigen Hohlkörper 10 mit nur geringen Verlusten durchdringen.

Die röhrenförmigen Glaskörper 10 können miteinander verschweisst sein. Auch ein Aneinanderkleben ist denkbar. In Fig. 2 sind die Klebstoffwulste mit der Bezugsziffer 24 gekennzeichnet.

Gemäß Fig. 3 können die röhrenförmigen Hohlkörper 10 auch durch endseitig angreifende Klemmleisten 26 zusammengehalten werden. Die Klemmleisten 26 müssen dann jedoch entsprechend der gewünschten Wölbung quer zu den Röhrenachsen gebogen sein.

Bei dem Ausführungsbeispiel gemäß Fig. 4 wird die Verglasung 14 durch kugelförmige Hohlkörper 10 gebildet. Die Verwendung kugelförmiger Hohlkörper erlaubt eine Wölbung der Verglasung 14 in jeder nur denkbaren Richtung.

Bei Beschädigung einer Kugel 10 braucht auch nur diese ausgewechselt zu werden. Eine komplette Auswechslung der Verglasung 14 ist nicht erforderlich.

Die in Fig. 1 mit der Bezugsziffer 16 gekennzeichnete Fläche kann z. B. eine Strahlungswärme absorbierende Fläche und z. B. nahe hinter der Verglasung 14 angeordnet sein. Die erfindungsgemäße Verglasung eignet sich also ganz besonders für Sonnenkollektoren. Die Erfindung umfaßt entsprechend verglaste Sonnenkollektoren.

Sämtliche in den Unterlagen offenbarten Merkmale werden als erfindungswesentlich beansprucht, soweit sie einzeln oder in Kombination gegenüber dem Stand der Technik bekannt sind.

0050322

Verglasung einer Raumöffnung oder dgl.

## Patentansprüche

1. Verglasung einer Raumöffnung oder dgl., dadurch g e k e n n z e i c h n e t , dass sie aus einer Vielzahl von aneinander-gefügten Voll- oder Hohlkörpern (10) aus Glas oder transparentem Kunststoff besteht.

2. Verglasung nach Anspruch 1, dadurch gekennzeichnet, dass die Voll- oder Hohlkörper (10) Kugelform haben, so dass eine beliebig gewölbte Glasfront herstellbar ist.

3. Verglasung nach Anspruch 1, dadurch gekennzeichnet, dass die Voll- oder Hohlkörper (10) langgestreckte, vorzugsweise zylindrische Stäbe bzw. Röhren sind, so dass eine in Richtung quer zur Stab- bzw. Röhrenachse beliebig gewölbte Glasfront herstellbar ist.

4. Verglasung nach einem der Ansprüche 1 bis 3, dadurch gekennzeichnet, dass die Voll- oder Hohlkörper (10) miteinander verschweisst sind.

5. Verglasung nach einem der Ansprüche 1 bis 3, dadurch gekennzeichnet, dass die Voll- oder Hohlkörper (10) miteinander verleimt sind.

6. Verglasung nach einem der Ansprüche 1 bis 5, dadurch gekennzeichnet, dass die Wanddicke der Hohlkörper (10) etwa 0,2 bis 0,8 mm beträgt.

FIG.1

12

18

16

10

10

20

14

22

FIG.2

10

24

FIG.3

26

10

FIG.4

18

10

14

10

Europäisches Patentamt

**EUROPÄISCHER RECHERCHENBERICHT**

0050322

Nummer der Anmeldung

EP 81 10 8381.5

| Kategorie | Kennzeichnung des Dokuments mit Angabe, soweit erforderlich, der maßgeblichen Teile | betrifft Anspruch |
|---|---|---|
| X | DE - B - 2 332 915 (GLAS- UND SPIEGEL-MANUFAKTUR N. KINON GMBH) <br> * Spalte 3, Zeile 13 bis Spalte 4, Zeile 19; Fig. * <br> -- | 1 |
| X | DE - A1 - 2 752 286 (F. LOHMANN) <br> * vollständiges Dokument * <br> -- | 1 |
| X | DE - U - 1 937 481 (K. KOESSLER) <br> * Ansprüche, Fig. * <br> -- | 1,3 |
| X | GB - A - 975 125 (THE DOW CHEMICAL CO.) <br> * Ansprüche 1,4; Fig. * <br> -- | 1,3,4 |
| X | US - A - 4 023 319 (T. KURATA) <br> * Ansprüche; Spalte 4, Zeilen 27 bis 32; Fig. 3 bis 29 * <br> -- | 1,3,5 |
| X | GLAS- UND SPIEGEL-MANUFACTUR AG <br> 20.November 1964, Gelsenkirchen-Schalke <br> "Mit Licht gebaut/5" <br> * Katalog vollständig * <br> -- | 1,5 |
| | US - A - 4 102 099 (F.R. GROSS et al.) <br> * Spalte 3, Zeile 61 bis Spalte 4, Zeile 22; Fig. 6 * <br> -- <br> ./.. | 1,5 |

**KLASSIFIKATION DER ANMELDUNG (Int. Cl.³)**

E 06 B 3/54
C 03 B 23/24
C 03 C 27/12
E 04 B 5/46
E 04 C 2/54
E 04 D 3/06
F 24 J 3/02

**RECHERCHIERTE SACHGEBIETE (Int. Cl.³)**

C 03 B 23/00
C 03 C 11/00
C 03 C 27/00
E 04 B 5/00
E 04 C 1/00
E 04 C 2/00
E 04 D 3/00
E 06 B 3/00
F 24 J 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 06-01-1982 | WUNDERLICH |

EPA form 1503.1 06.78

**Europäisches Patentamt**

**EUROPÄISCHER RECHERCHENBERICHT**

00503222

Nummer der Anmeldung

EP 81 10 8381.5
- Seite 2 -

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>GB - A - 1 366 481</u> (GKN SANKEY LTD.) <br> * vollständiges Dokument * <br> -- | 1,3,4 |
| A | <u>WO - A1 - 80/00078</u> (H. SCHÜRCH et al.) <br> * Anspruch 1 * <br> -- | 1,2,4 |
| A | <u>US - A - 3 780 722</u> (C.J. SWET) <br> * Spalte 2, letzter Absatz; Spalte 3, erster Absatz; Fig. 3 * <br> ---- | 1,5 |

**KLASSIFIKATION DER ANMELDUNG (Int. Cl.³)**

**RECHERCHIERTE SACHGEBIETE (Int. Cl.³)**